# EUROPÄISCHE PATENTSCHRIFT

(11) **EP 1 103 424 B1**
(45) Veröffentlichungstag und Bekanntmachung des Hinweises auf die Patenterteilung: **28.01.2004**
(21) Anmeldenummer: 00124674.3
(22) Anmeldetag: 11.11.2000
(51) Int. Cl.: B60R 13/02, B29C 44/30, B29C 44/32

(54) **Verfahren zum Herstellen eines Mehrschichtmaterials und Mehrschichtmaterial**
Method of making a laminate and laminate
Méthode pour la fabrication d'une materiau stratifié et materiau stratifié

(30) Priorität: 23.11.1999 DE 19956152
(43) Veröffentlichungstag der Anmeldung: 30.05.2001
(73) Patentinhaber: Johns Manville Europe GmbH, 60323 Frankfurt am Main (DE)
(72) Erfinder: Müser, Peter, 63801 Kleinostheim (DE); Seiss, Willi, Dr., 97906 Faulbach (DE)
(74) Vertreter: Knoblauch, Andreas, Dr.-Ing.

(56) Entgegenhaltungen:
- GB-A- 882 296
- US-A- 5 258 089

## Beschreibung

Die Erfindung betrifft ein Verfahren zum Herstellen eines Mehrschichtmaterials, insbesondere als Vorformteil für einen Autohimmel, mit den Merkmalen des Oberbegriffs des Anspruchs 1. Ferner betrifft die Erfindung ein Mehrschichtmaterial, insbesondere als Vorformteil für einen Autohimmel, mit den Merkmalen des Oberbegriffs des Anspruchs 7.

Eine bevorzugtes Anwendungsgebiet der Erfindung ist die Herstellung eines Vorformteils für einen Autohimmel. Dementsprechend wird die Erfindung in diesem Zusammenhang erläutert. Sie ist aber auch in anderen Fällen anwendbar, beispielsweise bei Innenraumverkleidungen von Fahrzeugen oder bei der Innenauskleidung von Behältern.

Mit der Entwicklung des einteiligen Autohimmels, der selbsttragend als vorgefertigtes Teil einbaufähig dem Fahrzeughersteller geliefert wird, begann der Wandel von der reinen dekorativen Verkleidung hin zu einer "multifunktionalen" Einheit, die z.B. auch für optische Anzeigenelemente oder als Verkleidung- und Aufnahmeelement für einen Kopfairbag genutzt werden kann. Der Autohimmel wird hierbei vielfach aus einem Mehrschichtmaterial gefertigt, das zunächst als reines Flächenmaterial vorliegt und dann durch Anwendung von Druck und Wärme in die "richtige" Form gebracht wird.

EP 0 248 199 B1 zeigt ein mehrschichtiges Verkleidungselement mit einem Kern aus Polyurethanschaum als Trägerschicht. Auf beiden Seiten dieser Trägerschicht befindet sich eine Auflage aus einer Acrylnitril-Butadien-Styrol-Folie. Hierbei ist die Trägerschicht aus Polyurethan an die Auflage angeschäumt. An der sichtbaren Seite ist mit Hilfe einer Klebefolie eine Dekorschicht aufgeklebt. Bei diesem Verkleidungselement werden die bislang verwendeten Glasfasern durch Thermoplaste ersetzt.

DE 35 16 132 C2 beschreibt eine mehrschichtige, tiefgezogene Innenverkleidung für Personenkraftwagen, insbesondere einen Autohimmel, bei dem auf eine innere Schaumstoffschicht beidseitig Glasfaservliese aufgebracht werden. Bei der Verformung eines derartigen Materials besteht die Gefahr, daß sich die Glasfaser zu stark spannen und dadurch Hohlräume entstehen.

DE 35 21 828 C2 beschreibt ein Verfahren zur Herstellung von mit Faservliesmatten verstärkten Polyurethanschaum-Formteilen, die beispielsweise als Innenverkleidungen von Kraftfahrzeugen verwendet werden können.

Hierzu wird ein Paar Glasfaservliesmatten unter Zwischenlage einer Sisalfaservliesmatte in ein Formwerkzeug eingelegt und in den Hohlraum des Formwerkzeugs ein Reaktionsgemisch eingebracht, das den Hohlraum innerhalb der Faservliesmatten ausfüllt und einen Polyurethanschaum bildet.

GB 882 296 A zeigt ein Verfahren zum Herstellen eines Mehrschichtmaterials, bei dem ein Schaumkunststoff mit einer Faserverstärkung und mindestens einer Decklage versehen wird, wobei man ein Faservlies mit einer fließfähigen Mischung aus schaumbildenden Komponenten beaufschlagt und dann durch eine Bandpresse führt. Dabei entsteht ein Mehrschichtmaterial, das eine Schaumkunststoffschicht mit einer Decklage auf mindestens einer Seite und eine Faserverstärkung aufweist, wobei die Faserverstärkung durch ein Faservlies gebildet ist, das im Schaum in einer teilweise aufgelösten Form vorliegt. Das Faservlies kann mit einem Bindemittel versehen sein. Das Vorhandensein eines Bindemittels ist jedoch nicht wesentlich. Man kann auch auf andere Weise dafür sorgen, daß das Vlies vor der Herstellung als einheitlicher Körper zusammengehalten wird, beispielsweise dadurch, daß man Fasern mit einer ausreichenden Länge verwendet.

US 5 258 089 A zeigt ein gattungsgemässe Verfahren zum Herstellen eines faserverstärkten Materials zur Verwendung in Automobilen. Hier wird ein genadeltes Glasfaservlies, das ein thermoplastisches Bindemittel enthält, mit einem Substrat versehen, das ausdehnbare Mikrokörperchen enthält. Die Fasern werden zusammen mit den Körperchen erhitzt. Dabei dehnen sich die Mikrokörperchen aus und der Binder schmilzt. Dadurch wird die gegenseitige Haltekraft der Fasern aneinander aufgelöst.

Der Erfindung liegt die Aufgabe zugrunde, die Herstellung eines Mehrschichtmaterials zu vereinfachen.

Diese Aufgabe wird bei einem Verfahren der eingangs genannten Art mit den Merkmalen des Anspruchs 1 gelöst.

Mit dieser Ausgestaltung kann man ein kontinuierliches Verfahren realisieren. Die schaumbildenden Komponenten können, solange sie noch in fließfähiger Form vorliegen, in das Faservlies eindringen. Bei der anschließenden Bildung des Schaumes befindet sich dann das Faservlies inmitten des Schaumes. Die Ausdehnung des Schaumes wird durch die Bandpresse definiert. Die Anordnung der Fasern inmitten des Schaumes vermeidet gefährliche und starre Faserbündel und Kanten, die z.B. bei einem Bruch des Materials nach Auslösen eines Kopfairbags zu erheblichen Verletzungsgefahren führen können. Darüber hinaus wird das Risiko einer Beschädigung bei nachfolgenden Umform- bzw. Preßvorgängen erheblich vermindert. Die Fasern liegen überwiegend mittig in der Schaumschicht und werden daher durch die Schaumschicht geschützt. Wenn man ein Glasfaservlies mit einem thermoplastischen Bindemittel wählt, dessen Glastemperatur unterhalb einer Reaktionstemperatur bei der Schaumbildung liegt, verliert das Bindemittel zumindest teilweise seine bindenden Eigenschaften, also seine "Haltekraft". Damit kommt es während des Aufschäumens zu einer teilweisen Auflösung des Vliesverbundes und zu einer "Durchmischung" des inneren Bereiches der Schaummatrix mit Fasermaterial. Dies verbessert die Möglichkeit der Schaumbildung, weil die entstehenden Bläschen die dann nicht mehr oder nicht mehr vollständig gebundenen Glasfasern verdrängen können, ohne beschädigt zu werden. Damit werden die Fasern beim Aufschäumen beweglich, so daß das Beschädigungsrisiko bei einer späteren Umformung und die "Abreicherung" der Verstärkung in Biege- und Kantenbereichen vermindert wird. Die Festigkeit und Stabilität des Materials wird verbessert. Man erhält eine verstärkte Schaummatrix, die eine verbesserte Schalldämmung und eine verbesserte passive Sicherheit aufweist, ohne daß Einbußen bei der Stabilität oder bei sonstigen Eigenschaften zu erwarten sind. Insbesondere entstehen keine scharfen Kanten, wenn ein Kopfairbag ausgelöst hat.

Als Schaum können grundsätzlich alle schaumbildenden Materialien verwendet werden, insbesondere Polyurethan, bei dem die fließfähige Mischung aus Polyol und Isocyanat und entsprechenden Katalysatoren zusammengesetzt wird. Aber auch Polyester ist als schaumbildendes Material grundsätzlich möglich. Das Faservlies ist vorzugsweise als Glasfaservlies ausgebildet. Polyesterfaservlilese sind ebenfalls möglich.

Vorzugsweise ist die Decklage dicht gegenüber der Mischung und dem daraus entstehenden Schaum und man führt die Decklage gemeinsam mit dem getränkten Faservlies durch die Bandpresse. Mit dieser Ausgestaltung verhindert man eine Verschmutzung der Bandpresse durch den Schaum. Gleichzeitig wird die Decklage fest mit dem Schaum verklebt. Man erhält damit ein sehr innig verbundenes Material mit guten Gebrauchseigenschaften. Üblicherweise wird man beide Seiten des Schaumes mit der Decklage versehen. Die Decklagen bilden dann die äußeren Oberflächen der Schaumschicht.

Vorzugsweise wählt man als Decklage eine Klebefolie und führt ein weiteres Flächenmaterial an der Außenseite mit durch die Bandpresse. Die Klebefolie kann bereits an sich klebrig sein. Sie kann aber auch erst durch die bei der Schaumbildung auftretenden Reaktionstemperaturen klebrig werden. Beispielsweise kann man eine modifizierte PE-Folie verwenden, die bei der Reaktionstemperatur erweicht und dann als Kleber für das weitere Flächenmaterial dient. Nach dem Durchlaufen durch die Bandpresse, also praktisch mit einem einzigen Verfahrensschritt, steht das Mehrschichtmaterial zur Verfügung.

Bevorzugterweise bringt man als Flächenmaterial auf einer Seite ein Gegenzugmaterial und auf der gegenüberliegenden Seite ein Dekormaterial auf. Das Mehrschichtmaterial ist dann bereits fertig für die Weiterverarbeitung zu einem Autohimmel oder zu einem anderen Innenverkleidungsteil.

Vorzugsweise gibt man die schaumbildenden Komponenten so kurz vor der Bandpresse zu, daß der größte Teil der Schaumbildung innerhalb der Bandpresse erfolgt. Dadurch erreicht man mehrere Vorteile. Zum einen kann man die Dimensionsgenauigkeit des Mehrschichtmaterials besser kontrollieren, weil die Bandpresse die Ausdehnung des Schaumes während der Schaumreaktion begrenzt. Zum anderen ist zum Vorschub ein geringerer Kraftaufwand notwendig, weil das aufgeschäumte Material nicht mehr zusammengedrückt werden muß. Schließlich läßt sich auch die Konsistenz oder die innere Beschaffenheit des Schaumes besser steuern. Gegebenenfalls kann man das Faservlies bereits in einer größeren Entfernung von der Bandpresse mit einer ersten Komponente versehen und eine zweite Komponente erst kurz vorher zugeben, wenn diese zweite Komponente, beispielsweise ein Katalysator, die Schäumungsreaktion erst auslöst.

Vorteilhafterweise wählt man ein Glasfaservlies mit einem Bindemittelanteil im Bereich von 0,1 % bis 20 %, insbesondere von 0,1 % bis 7 %. Je niedriger der Bindemittelanteil ist, desto besser können die schaumbildenden Komponenten in das Glasfaservlies eintreten und es durchdringen. Das Bindemittel liegt dann überwiegend nur an den Kreuzungspunkten zwischen Glasfasern vor. Die Zwischenräume zwischen den Glasfasern sind hingegen frei für die Aufnahme der schaumbildenden Komponenten. Dies hat darüber hinaus den Vorteil, daß sich der Schaum so bilden kann, daß sich die hierbei entstehenden Poren hauptsächlich in den Zwischenräumen zwischen den Glasfasern anlagern. Die kleinen "Gasblasen" werden also nicht durch die Glasfasern gleich wieder zerstört. Damit lassen sich relativ dicke Mehrschichtmaterialien realisieren. Ein niedriger Bindemittelanteil hat darüber hinaus noch den Vorteil, daß das Glasfaservlies leichter gehandhabt werden kann. Es läßt sich insbesondere von einer Rolle abwickeln.

Die Aufgabe wird bei einem Mehrschichtmaterial der eingangs genannten Art mit den Merkmalen des Anspruchs 7 gelöst.

Wie oben im Zusammenhang mit dem Herstellungsverfahren erläutert, zeichnet sich ein derartiges Mehrschichtmaterial dadurch aus, daß es einerseits einen faserverstärkten Schaum aufweist, der ein gutes Geräuschdämmungsverhalten bei hoher Festigkeit aufweist, das aber andererseits noch gut verform- und handhabbar ist. Die teilweise Auflösung des Faservlieses ermöglicht insbesondere ein gutes Umformverhalten. Das Bindemittel hält die Fasern des Faservlieses nach der Herstellung des Vlieses und beim Transport solange zusammen, wie dies erforderlich ist. Wenn sich hingegen der Schaum um die Fasern des Vlieses legt, ist dieser Zusammenhalt nicht mehr oder nicht mehr in diesem Maße erforderlich. Das Bindemittel kann dann erweichen und seine Haltekraft vermindern oder einbüßen, so daß die Fasern nach dem Schäumen in einer Lage liegen, die für den Schaum optimal ist.

Vorzugsweise weist das Faservlies einen Bindemittelanteil im Bereich von 0,1 bis 20 %, insbesondere von 0,1 bis 7 % auf. Je niedriger der Bindemittelanteil ist, desto besser kann der Schaum in das Faservlies vordringen.

Vorzugsweise ist die Decklage als Klebefolie ausgebildet, auf die ein zusätzliches Flächenmaterial geklebt ist. Damit erhält man ein sehr kompaktes und gut zusammenhaltendes Mehrschichtmaterial, das unmittelbar für die Fertigung von Innenverkleidungen verwendet werden kann.

Die Erfindung wird im folgenden anhand eines bevorzugten Ausführungsbeispiels in Verbindung mit der Zeichnung näher beschrieben. Hierin zeigen:
- Fig. 1: eine Vorrichtung zum Herstellen eines Mehrschichtmaterials und
- Fig. 2: eine vergrößerte Querschnittsansicht durch das Mehrschichtmaterial.

Ein Glasfaservlies 1 wird von einer nicht näher dargestellten Vorratsposition, beispielsweise einer Vorratsrolle, über eine Umlenkrolle 2 einer Bandpresse 3 zugeführt, die zwischen zwei Bändern 4, 5 einen definierten Abstand aufweist. Gegebenenfalls können die Bänder noch in nicht näher dargestellter Weise durch Stützflächen unterstützt werden. Dem Spalt zwischen den beiden Bändern 4, 5 wird nicht nur das Glasfaservlies 1 zugeführt, sondern von unten eine erste Folie 6 aus einem modizifierten Polyethylen (PE) und ein Gegenzugsmaterial 7, beispielsweise Polyesterspunbonds. Die Folie 6 wird hierbei vor einer Position 8 zugeführt, an der schaumbildende Materialien in flüssiger Form auf das Glasfaservlies aufgebracht werden. Bei diesen Materialien kann es sich beispielsweise um Polyol und Isocyanat und entsprechenden Katalysatoren handeln, die bei ihrer Reaktion einen Polyurethanschaum bilden. Diese Materialien werden zuvor in einem Mischer 9 aufbereitet. Anstelle eines Polyurethanschaumes kann man auch einen Polyester-Schaum verwenden.

Von oben wird ebenfalls eine Folie 10 aus einem modifizierten Polyester zugeführt und weiterhin ein Dekormaterial 11.

Dargestellt ist, daß der Mischer 9 vor dem Eingang der Bandpresse angeordnet ist und die Mischung aus schaumbildenden Komponenten über eine Zuführleitung 12 in den Spalt der Bandpresse 3 einführt. Natürlich kann der Mischer 9 auch seitlich neben der Bandpresse 3 angeordnet sein, um den Zuführweg kurz zu halten.

Das Glasfaservlies weist ein Flächengewicht im Bereich von 25 bis 450 g/m², vorzugsweise von 250 bis 350 g/m² auf. Es ist auf herkömmliche Weise hergestellt und mit einem thermoplastischen Bindemittel im Bereich von 0,1 bis 20 %, vorzugsweise 0,1 bis 7 %, bezogen auf das Gesamtgewicht des Vlieses beaufschlagt. Die Dicke des Vlieses liegt im Bereich von 1 bis 5 mm.

Die beiden Folien 6, 10 sind gegenüber den schaumbildenden Komponenten und gegenüber dem Schaum dicht. Sie verhindern, daß der Schaum die Bandpresse verschmutzt oder die Flüssigkeit nach unten durchschlägt. Wenn nun das Glasfaservlies 1 mit den schaumbildenden Komponenten, beispielsweise mit einem Gemisch aus Polyol und Isocyanat und entsprechenden Katalysatoren beaufschlagt wird, dann kann dieses fließfähige Gemisch das Glasfaservlies 1 durchdringen, jedoch nicht nach unten abfließen, weil es dort durch die modifizierte PE-Folie 6 gehalten wird. Das Aufbringen der schaumbildenden Komponenten erfolgt so kurz vor der Bandpresse 3, daß die Schaumbildung erst im Bereich zwischen den Bändern 4, 5 stattfindet. Die beiden Bänder 4, 5 begrenzen daher die Ausdehnung des Schaumes.

Bei der Schaumbildung, genauer gesagt der damit verbundenen bzw. vorhergehenden chemischen Reaktion entsteht eine erhöhte Reaktionstemperatur. Das Glasfaservlies 1 ist mit einem thermoplastischen Bindemittel versehen, dessen Glaspunkt oder -temperatur niedriger ist als die Reaktionstemperatur des Schaumes. Es kann sich beispielsweise ebenfalls um einen modizifierten Polyester handeln. Aufgrund der erhöhten Reaktionstemperatur lösen sich die Verbindungen an den Kreuzungspunkten zwischen den einzelnen Glasfasern. Bei der Schaumbildung können die Glasfasern daher verlagert werden, so daß sich beispielsweise die einzelnen Bläschen in dem Schaum bilden können, ohne daß sie sofort durch Glasfasern zerstört werden. Es ergibt sich ein quasi natürliches Optimum bei der Anordnung der Glasfasern im Schaum und zu einer Durchmischung des inneren Bereiches der so gebildeten Schaummatrix mit dem Fasermaterial. Dies vermeidet die gefährlichen, starren Faserbündel und Kanten, die z.B. bei einem Bruch zu erheblichen Verletzungsgefahren führen könnten.

Nachfolgende Umform- bzw. Preßvorgäne sind bei dem so gebildeten Material weniger kritisch, weil die überwiegend mittig im Verbund liegenden Verstärkungsfasern und die bei höheren Temperaturen vorhandene "Beweglichkeit" der Fasern das Risiko von Beschädigungen und die "Abreicherung" der Verstärkungsfasern in den Biege- und Kantenbereichen vermindert.

Durch die erhöhte Reaktionstemperatur werden auch die PE-Folien 6, 10 erweicht. Sie verbinden sich damit nicht nur sehr fest und innig mit dem Schaum, sondern dienen gleichzeitig auch als Klebegrundlage für die Gegenzugsmaterialien 7 und die Dekorschicht 11.

Auf die dargestellte Weise wurde ein Glasfaservlies mit 280 g/m² und 135 cm Breite nach bekannten Methoden hergestellt und mit 3 % eines thermoplastischen Binders versehen. Die Glasfasern haben einen Durchmesser im Bereich von 8 bis 16 µm, bevorzugt von 13 µm und eine mittlere Länge von 16 mm. Die Dicke des Vlieses beträgt 2,8 mm. Die Festigkeit wurde mit 180 N/5 cm bestimmt. Das so hergestellte Vlies wurde mit einem Gemisch aus Polyol, Isocyanat und Katalysator beaufschlagt und zusammen mit zwei PE-Folien der Bandpresse 3 von 35 m Länge zugeführt. Die Laufgeschwindigkeit betrug 23 m/min. Die eingestellte Dicke betrug 4 mm.

Nach der Bandpresse 3 kann das so gebildete Material mit Hilfe einer Schneideinrichtung 13 in Platten geschnitten werden. Die so hergestellten Platten ließen sich gut umformen, ohne daß Beschädigungen auftraten. Nach Einbringen eines Kreuzschnittes ergaben sich relativ weiche Ecken, die ein gutes Rückfederverhalten hatten.

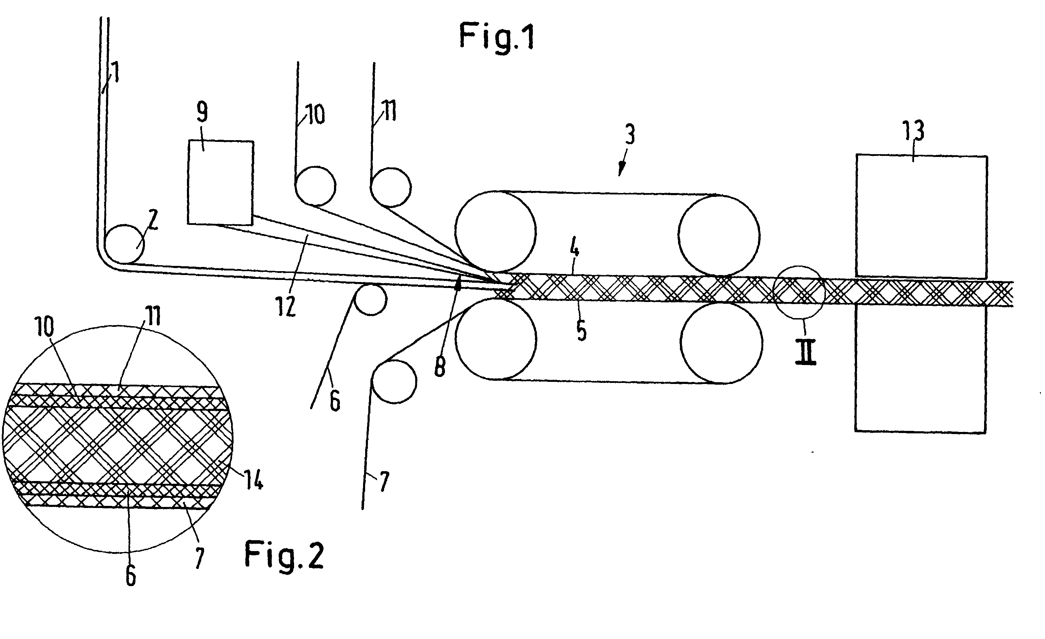

Fig. 2 zeigt schematisch eine Querschnittsansicht entsprechend dem Ausschnitt II nach Fig. 1. Hierbei liegt ein Kern 14 aus PU-Schaum vor, in den Glasfasern als Verstärkungsmaterial eingebettet sind.

## Patentansprüche

1. Verfahren zum Herstellen eines Mehrschichtmaterials, insbesondere als Vorformteil für einen Autohimmel, bei dem ein Schaumkunststoff (14) mit einer Faserverstärkung (1) und mindestens einer Decklage (6, 10) versehen wird, wobei man ein Faservlies (1) mit einer fließfähigen Mischung aus schaumbildenden Komponenten beaufschlagt und dann durch eine Bandpresse (3) führt, **dadurch gekennzeichnet, daß** man ein Glasfaservlies mit einem thermoplastischen Bindemittel wählt, dessen Glastemperatur unterhalb einer Reaktionstemperatur bei der Schaumbildung liegt.

2. Verfahren nach Anspruch 1, **dadurch gekennzeichnet, daß** die Decklage (6, 10) dicht gegenüber der Mischung und dem daraus entstehenden Schaum ist und man die Decklage (6, 10) gemeinsam mit dem getränkten Faservlies (1) durch die Bandpresse (3) führt.

3. Verfahren nach Anspruch 2, **dadurch gekennzeichnet, daß** man als Decklage (6, 10) eine Klebefolie wählt und ein weiteres Flächenmaterial (7, 11) an der Außenseite mit durch die Bandpresse (3) führt.

4. Verfahren nach Anspruch 3, **dadurch gekennzeichnet, daß** man als Flächenmaterial auf einer Seite ein Gegenzugmaterial und auf der gegenüberliegenden Seite ein Dekormaterial aufbringt.

5. Verfahren nach einem der Ansprüche 1 bis 4, **dadurch gekennzeichnet, daß** man die schaumbildenden Komponenten so kurz vor der Bandpresse (3) zugibt, daß der größte Teil der Schaumbildung innerhalb der Bandpresse (3) erf olgt .

6. Verfahren nach einem der Ansprüche 1 bis 5, **dadurch gekennzeichnet, daß** man ein Glasfaservlies (1) mit einem Bindemittelanteil im Bereich von 0,1 % bis 20 %, insbesondere von 0,1 % bis 7 % wählt.

7. Mehrschichtmaterial, insbesondere als Vorformteil für einen Autohimmel, das eine Schaumkunststoffschicht (14) mit einer Decklage (6, 10) auf mindestens einer Seite und eine Faserverstärkung (1) aufweist, wobei die Faserverstärkung durch ein Faservlies (1) gebildet ist, das im Schaum in einer teilweise aufgelösten Form vorliegt, **dadurch gekennzeichnet, daß** das Faservlies ein thermoplastisches Bindemittel mit einer Glastemperatur aufweist, die unterhalb einer Reaktionstemperatur bei der Schaumbildung liegt.

8. Material nach Anspruch 7, **dadurch gekennzeichnet, daß** das Faservlies (1) einen Bindemittelanteil im Bereich von 0,1 bis 20 %, insbesondere von 0,1 bis 7 % aufweist.

9. Material nach Anspruch 7 oder 8, **dadurch gekennzeichnet, daß** die Decklage (6, 10) als Klebefolie ausgebildet ist, auf die ein zusätzliches Flächenmaterial (7, 11) geklebt ist.

## Claims

1. Method of producing a multilayer material, in particular as a preform for a car headlining, in which a foamed plastic (14) is provided with a fibre reinforcement (1) and at least one covering layer (6, 10), a fibre nonwoven (1) having a free-flowing mixture of foam-forming components applied to it and then being led through a belt press (3), **characterized in that** a glass-fibre nonwoven is chosen with a thermoplastic binder of which the glass temperature lies below a reaction temperature during the foam formation.

2. Method according to Claim 1, **characterized in that** the covering layer (6, 10) is dense as compared with the mixture and the foam produced from the latter, and the covering layer (6, 10) is led through the belt press (3) together with the impregnated fibre nonwoven (1).

3. Method according to Claim 2, **characterized in that** the covering layer (6, 10) chosen is an adhesive film and a further two-dimensional material (7, 11) is also led through the belt press (3) on the outside.

4. Method according to Claim 3, **characterized in that** a tension-counteracting material is applied to one side as two-dimensional material, and a decorative material is applied to the opposite side.

5. Method according to one of Claims 1 to 4, **characterized in that** the foam-forming components are added at such a short distance upstream of the belt press (3) that the major part of the foam formation takes place within the belt press (3).

6. Method according to one of Claims 1 to 5, **characterized in that** a glass fibre nonwoven (1) with a proportion of binder in the range from 0.1% to 20%, in particular from 0.1% to 7%, is chosen.

7. Multilayer material, in particular as a preform for a car headlining, which has a foamed plastic layer (14) with a covering layer (6, 10) on at least one side and a fibre reinforcement (1), the fibre reinforcement being formed by a fibre nonwoven (1) which is present in the foam in a partly dissolved form, **characterized in that** the fibre nonwoven has a thermoplastic binder with a glass temperature which lies below a reaction temperature during the foam formation.

8. Material according to Claim 7, **characterized in that** the fibre nonwoven (1) has a proportion of binder in the range from 0.1 to 20%, in particular from 0.1 to 7%.

9. Material according to Claim 7 or 8, **characterized in that** the covering layer (6, 10) is formed as an adhesive film, to which an additional two-dimensional material (7, 11) is adhesively bonded.

## Revendications

1. Procédé de fabrication d'un matériau multicouches, en particulier comme ébauche de toit pour une voiture automobile, dans lequel une matière synthétique en mousse (14) est dotée d'un renfort de fibres (1) et d'au moins une couche de recouvrement (6, 10), un feutre de fibres (1) recevant un mélange fluide de composants aptes à former une mousse et étant ensuite passé dans une presse à bandes (3), **caractérisé en ce que** l'on sélectionne un feutre de fibres de verre et un liant thermoplastique dont la température de transition vitreuse est inférieure à la température de la réaction de formation de la mousse.

2. Procédé selon la revendication 1, **caractérisé en ce que** la couche de recouvrement (6, 10) est étroitement proche du mélange et de la mousse qui en est produite et **en ce que** l'on fait passer la couche de recouvrement (6, 10) dans la presse à bandes (3) en même temps que le feutre de fibres (1) imprégné.

3. Procédé selon la revendication 2, **caractérisé en ce que** l'on sélectionne comme couche de recouvrement (6, 10) une feuille adhésive et **en ce que** l'on fait en même temps passer dans la presse à bandes (3) un autre matériau plat (7, 11) sur le côté extérieur.

4. Procédé selon la revendication 3, **caractérisé en ce que** comme matériau plat, on applique sur un côté un matériau en contre-traction et sur le côté opposé un matériau décoratif.

5. Procédé selon l'une des revendications 1 à 4, **caractérisé en ce que** l'on apporte les composants aptes à former une mousse suffisamment peu avant la presse à bandes (3) pour que la plus grande partie de la formation de la mousse ait lieu à l'intérieur de la presse à bandes (3).

6. Procédé selon l'une des revendications 1 à 5, **caractérisé en ce que** l'on sélectionne un feutre de fibres de verre (1) dont la teneur en liant est comprise entre 0,1 et 20 %, en particulier entre 0,1 et 7 %.

7. Matériau multicouches, en particulier comme ébauche de toit pour une voiture automobile, qui présente une couche (14) de matière synthétique en mousse dotée d'une couche de recouvrement (6, 10) sur au moins un côté et un renfort de fibres (1), le renfort de fibres étant formé d'un feutre de fibres (1) qui se présente sous une forme en partie désagrégée dans la mousse, **caractérisé en ce que** le feutre de fibres présente un liant thermoplastique dont la température de transition vitreuse est inférieure à la température de la réaction de formation de la mousse.

8. Matériau selon la revendication 7, **caractérisé en ce que** le feutre de fibres (1) présente une teneur en liant comprise entre 0,1 et 20 %, en particulier entre 0,1 et 7 %.

9. Matériau selon la revendication 7 ou 8, **caractérisé en ce que** la couche de recouvrement (6, 10) est configurée en feuille adhésive sur laquelle est collé un matériau plat supplémentaire (7, 11).
